# EUROPEAN PATENT SPECIFICATION

(11) **EP 1 053 684 B1**
(45) Date of publication and mention of the grant of the patent: **06.11.2002**
(21) Application number: 00201658.2
(22) Date of filing: 09.05.2000
(51) Int. Cl.: A22C 17/00

(54) **Automatic machine for deboning animal parts using cutting means comprising a fluid jet**
Automatische Anlage zum Entbeinen von Schlachttierteilen mit einer Hochdruckflüssiskeitstrahlvorrichtung
Machine automatique à désosser à jet fluide des parties de carcasses

(30) Priority: 18.05.1999 IT MI991082; 21.04.2000 IT MI000910
(43) Date of publication of application: 22.11.2000
(73) Proprietor: M.B.A. - S.R.L., Rubiera (RE) (IT)
(72) Inventor: Guerze', Wainer, Modena (IT); Panciroli, Luciano, Rubiera (Reggio Emilia) (IT); Biasetti, Marco, Rubiera (Reggio Emilia) (IT)
(74) Representative: Alagem Modiano, Lara S.

(56) References cited:
- EP-A- 0 439 784
- WO-A-85/02320
- DE-A- 2 227 369
- DE-A- 3 714 677

## Description

The present invention relates to an automatic machine for deboning parts of pig or bovine animals which require separation of the meat from the bone as, for example, in the case of fresh hams and the like.

It is known that the production of cooked hams ready for cutting by the delicatessen dealer and/or the consumer involves numerous preparation and processing stages; in so-called high-quality products these operations are supervised with particular care and, for this reason, are performed substantially manually and therefore depend on the skill of the operator and on his/her physical characteristics and resistance to fatigue since said operations require considerable physical strength and are extremely tiring.

It is also known that the cutting of fresh hams, for deboning thereof prior to cooking, is performed using tools such as blades which have been perfectly sharpened and consequently are very dangerous for the operator in view of the high risk of injury associated therewith.

It is also known that using the same instruments in order to debone different batches of meat may result in contamination of the said instruments, increasing the bacterial content of the meat and increasing the risk of infection thereof.

In addition, said blades must always be kept perfectly sharpened and therefore require frequent replacement and re-sharpening, resulting in idle time and storage and maintenance costs.

Examples of deboning machines are available from documents DE-A-2227369 and WO-A-8502320.

The technical problem which is posed, therefore, is that of providing a machine which allows separation of the meat from the bone of pig or bovine animal parts without substantial intervention by the operator during cutting and removal of the bone and which allows the use of sharpened blades during said cutting operations to be avoided.

Said problems are solved according to the present invention by a machine for separating meat from the bone of animal parts, comprising the features set forth in claim 1.

Further details may be obtained from the following description of a non-limiting example of embodiment of the invention provided with reference to the accompanying drawings in which:
- Figure 1 shows a plan view of a first embodiment of the machine according to the invention;
- Figure 2 shows a cross-section along the plane indicated by II-II in Fig. 1;
- Figure 3 illustrates the operating sequence of the machine according to Fig. 1;
- Figure 4 shows a side view of a second embodiment of the machine according to the invention;
- Figure 5 shows a plan view of the machine according to Fig. 4;
- Figure 6 shows a partial cross-section along the plane indicated by VI-VI in Fig. 5; and

Figure 7 shows an enlarged detail of a partial deboning station of the machine according to Fig. 4.

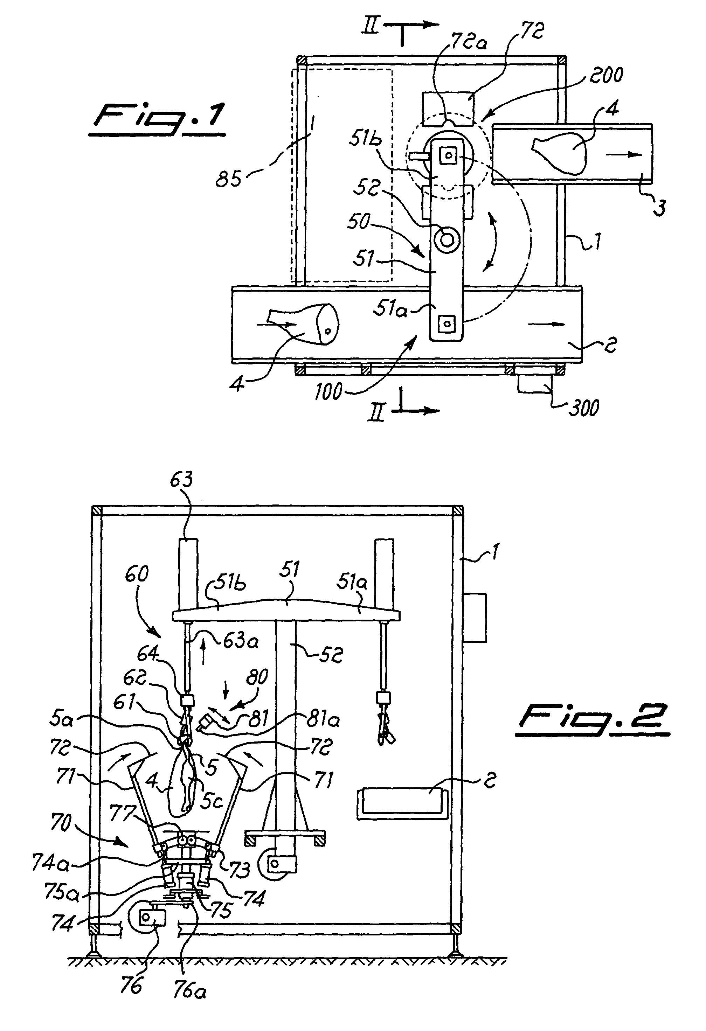

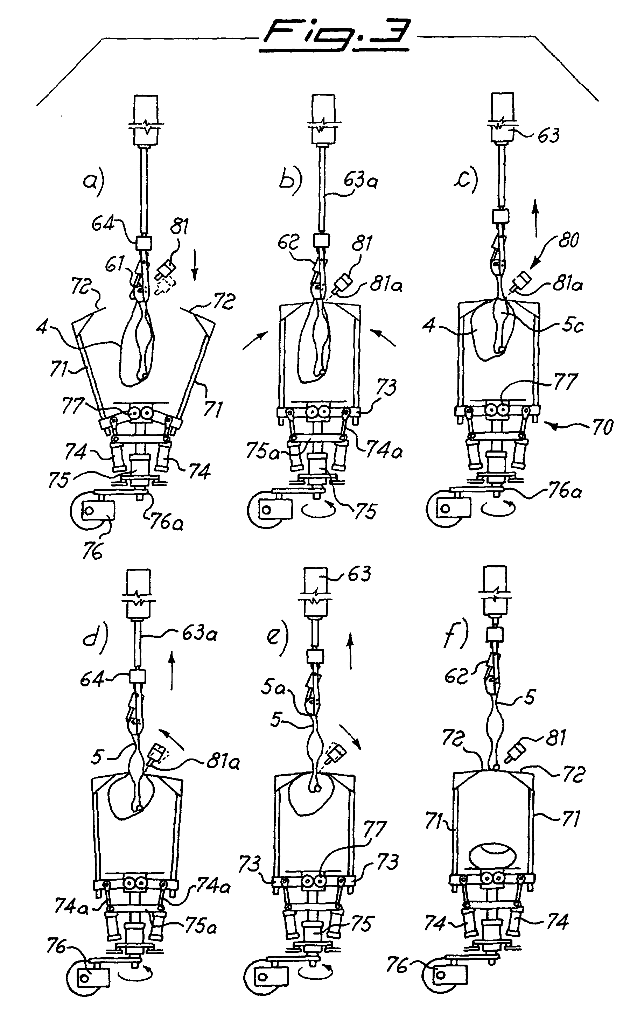

As shown in Figs. 1 to 3, the automatic machine according to the invention consists, in a first embodiment, of a fixed frame 1 containing a loading station 100 and a cutting/deboning station 200; the frame 1 also supports belt-type conveying means 2 and 3 for feeding the hams 4 to the loading station and removing the deboned ham 4 from the cutting/deboning station 200, respectively.

The machine also comprises means 50 for conveying the ham 4 from the loading station 100 to the cutting/deboning station 200, said means essentially consisting of an arm 51 mounted on a column 52 rotating upon actuation of associated actuating devices (known per se and therefore not shown) so as to form two half-arms 51a,51b which are symmetrical with respect to the axis of rotation.

The free ends of said half-arms 51a,51b support the means 60 for gripping the shin 5a of the bone 5 of the ham 4. Said gripping means consist of a gripper, the jaws 61 of which, actuated by an associated cylinder 62, are self-centring and designed to engage with and retain the end part of the shin-bone 5a.

Each gripping assembly 60 is mounted on the free end of the rod 63a of a cylinder 63 integral with the said half-arms 51a,51b, via an articulated joint 64 which allows the gripper to be made idle with respect to the rod and is able to vary its inclination.

Means 70 for retaining the meat of the ham and devices 80 for cutting the latter are arranged in the . cutting/deboning station 200.

In greater detail, said means for retaining the meat of the ham consist of a clamp 70, the arms 71 of which are provided, at their respective ends, with an associated plate 72, the edge of which directed towards the ham has a seat 72a designed to contain partially the bone and thus allow clamping thereof.

Said arms are actuated, via a transmission 73, by the rod 74a of a respective cylinder 74; the retaining device is provided with a self-centring action by means of two gear wheels 77 joined to the arms 71 at a corresponding pivot point.

Said cylinders 74 are in turn integral with a bracket 75a integral with a rotating shaft 75, the axis of rotation of which is substantially parallel to the longitudinal axis of the cylinder 63 and hence the bone 5.

Rotation of the shaft 75 is obtained by means of a gearmotor 76 and associated transmission means 76a.

In this way the gripper 70 is able to clamp the ham and rotate it about its axis of rotation, i.e. the longitudinal axis of the bone 5.

The said means for cutting the meat consist of a delivery head 81 comprising a nozzle 81a emitting a jet of water which is supplied at a very high pressure by a draw-off and pressurisation device 85 which is only schematically shown in broken lines in Fig. 1.

It also envisaged that the head 81 may be able to pivot both on a longitudinal axis and on an axis transverse to that of the jet so that it may always be correctly oriented and at the programmed distance from the bone during the cutting operations.

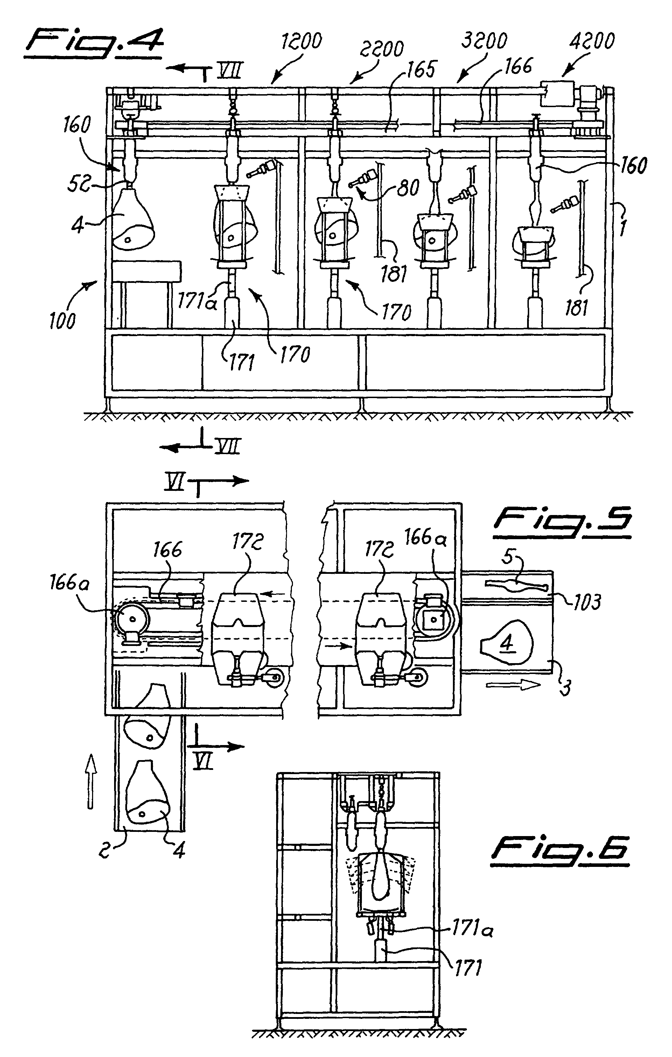

The operating principle of the machine is as follows:
- the belt 2 conveys the ham to the pick-up station 100 where the end 5a of the shin-bone is engaged by the gripper 60 positioned at the correct height by the rod 62a of the cylinder 62;
- the return movement of the rod 63a causes raising of the ham which, remaining suspended from the gripper 60, is arranged vertically and brought into the cutting/deboning station 200 by rotation of the column 52;
- at this point (Fig. 3b) the cylinder causes the rod 63a to move out again so as to position the ham at the height of the cutting head and the retaining plates 72;
- the meat retaining clamp 70 closes, the whole assembly starts to rotate and the valve for intercepting the water jet opens, allowing the stream of water to flow out;
- the gripper 61 for gripping the end of the bone is pulled by the cylinder 63, so that the bone 5 starts to be pulled in the longitudinal direction, while the meat is retained in the axial direction by the plates 72 of the gripper 70. During pulling, the meat retaining assembly continues to rotate, allowing the jet of water to cut the meat around the bone, freeing the latter gradually by means of extraction;
- during gradual extraction of the bone the joint 5c of the knee is reached, said joint having a width greater than that of the bone and causing a corresponding opening movement of the plates 72 which, giving way, adapt themselves to the shape of the knee and are automatically centred, allowing the latter to pass through and therefore be extracted;
- as pulling continues, the arms 71 and therefore the plates 72 of the clamp 70 are continuously adapted to the shape of the bone and at the same time the rotational movement and the jet of water continue to perform cutting of the meat around the said bone;
- once the travel movement of the rod 63a intended to allow complete extraction of the bone has been terminated, the valve for shutting off the cutting water closes, rotation is interrupted and the assembly is stopped in a synchronised manner: at this point the meat is completely detached and separated from the bone and, falling, is collected by the belt 3 and conveyed away, while the bone remains attached to the gripper 60 which releases it upon return to the loading station 100.

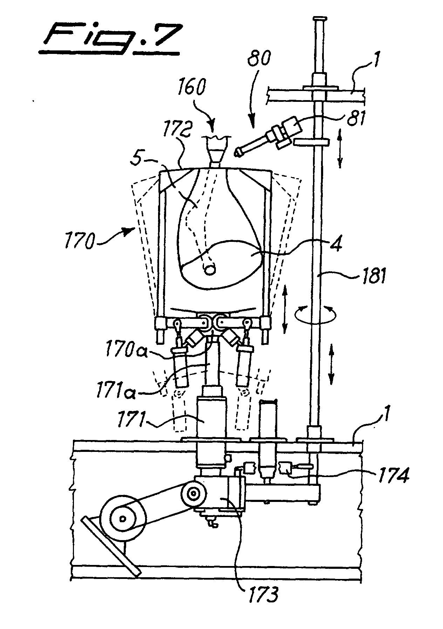

Figures 4 to 7 show a further embodiment of the machine according to the invention, which allows a considerable increase in the productivity thereof to be achieved.

In this configuration of the machine, the frame 1 is provided internally with at least one loading station 100 and a plurality of stations for partial deboning of the ham 4.

In greater detail, each partial deboning station 1200,2200,3200,4200 comprises a clamp 170 for retaining the meat of the ham 4, which is entirely similar to that already described above; in this case, however, the plates 172 are located at different heights (Fig. 4) with respect to the machine base so that they are able to close in different positions of the bone 5.

In addition, each clamp 170 (Fig. 7) is mounted on a support 170a which is fastened to the rod 171a of a cylinder 171 integral with the machine base; in this way the entire clamping assembly 170, in addition to rotating as in the case above, is also able to be displaced in a direction substantially parallel to the longitudinal axis of the bone 5 from a maximum height position to a minimum height position.

Correspondingly the meat cutting head 81 is mounted on an upright 181 which can be displaced vertically in both directions, together with displacement of the said meat retaining means 170.

The bottom end of the upright 181 is in fact connected to the reduction unit 173 for performing rotation of the assembly 170, which reduction unit is in turn mounted on the end of the rod 171a, opposite to that of the said assembly 170.

The bottom part of the upright 181 is also connected to a cylinder 174 for imparting a rotational movement to the upright and therefore to the fluid delivery head 81.

The hams 4 being processed are conveyed to the various stations by means of the grippers 160, the top part of which is fastened to slides 165 integral with an endless chain/belt 166 arranged between two gear wheels/pulleys 166a, one of which is motorized and the other idle.

In this way an outward travel path and a return travel path are defined for the grippers which, when advancing along the outward travel path following actuation and control by suitable means, convey the ham 4 to the following deboning stations, while, when they advance along the return travel path, they are displaced towards the initial position for picking up the ham from the loading station 100.

The operating principle of the machine in this case is as follows:
- the gripper 160, which is present at the loading station 100, picks up the ham 4, clamping the end 5a of the bone;
- upon operation of the control means, it moves to the first partial deboning station 1200 where the first clamping assembly 170, positioned by the cylinder 171 in the maximum height position, closes its plates 172 around the bone in a position above the meat on the ham;
- the sequence involving rotation of the clamping assembly and delivery of the cutting fluid commences, as in the case above;
- at the same time the rod 171a of the cylinder 171 is moved downwards again so that the plates 172 pull down the meat along the bone 5 which is kept immobile by the gripper 160;
- once the first partial deboning stage has been completed, the upright 181 is rotated by means of the cylinder 174 so as to move the head 81 outside of the trajectory of the grippers 160 and, at the same time, the clamp 170 opens and causes displacement of the gripper 160 towards the next deboning station 2200 where the plates 172 are in turn arranged at their maximum height from the base, but at a height therefrom which is less than that of the first station 1200, so that they are able to engage again with the meat in the relative position along the bone 5 reached in the first station.

During the downward travel of the clamp 170, further extraction of meat from the bone 5 occurs.

A similar sequence occurs for all the following partial deboning stations until the meat has been completely separated from the bone.

At this point the meat is deposited onto the outgoing belt 3, while the bone may be deposited onto a separate belt 103 for conveying away thereof.

With the embodiment of the machine described above it is possible to obtain high production speeds and an improved quality of the meat since the plates 172 of the clamp 170 in each station may be assigned a specialised function for the particular section of the bone (shin/knee/thigh) on which they act, thus ensuring greater cutting precision around the bone, in turn resulting in less wastage of meat and an improved quality thereof.

It is envisaged, moreover, that these loading/unloading operations may be performed by means of associated automatic devices which do not require the presence of an operator in the vicinity of the machine.

The control, operation and synchronization of the movements may be fully achieved by means of programming devices which are schematically denoted by 300 in Fig. 1 and which are connected to detectors and sensors designed to determine the relative position of the various parts and send corresponding signals to the control system 300.

## Claims

1. Machine for separating meat from the bone (5) of parts (4) of animals, comprising a frame (1) containing at least one station (200) for cutting/deboning an animal part (4) and arranged at said at least one station (200):
- means (60, 160) for retaining the bone (5);
- means (70, 170) for retaining the meat (4) in a direction parallel to the direction of the longitudinal axis of the bone;
- means (63, 171) for relative movement of said bone and meat retaining means (70, 170);
- means (80) for cutting the meat around the bone;
**characterized in that** it further comprises rotation and transmission means (76, 76a) for providing rotation of said meat retaining means (70, 170) about an axis which is substantially parallel to the longitudinal axis of the bone (5), and **in that** said cutting means (80) provide a fluid jet which perform cutting of the meat around the bone (5).

2. Machine according to Claim 1, **characterized in that** said fluid is a liquid.

3. Machine according to Claim 2, **characterized in that** said liquid is water.

4. Machine according to Claim 1, **characterized in that** said cutting means comprise a delivery head (81) provided with a nozzle for emitting the fluid jet.

5. Machine according to Claim 4, **characterized in that** said head (81) is supplied by means of fluid draw-off and pressurisation devices (85).

6. Machine according to Claim 4, **characterized in that** said head pivots about the longitudinal and transverse axes of the jet.

7. Machine according to claim 1, **characterized in that** said rotation and transmission means comprise a gearmotor (76) and associated transmission means (76a) which rotate a rotating shaft (75) adapted to provide rotation of said means (70, 170) for retaining the meat of the part (4) about an axis which is substantially parallel to the longitudinal axis of the bone.

8. Machine according to Claim 7, **characterized in that** said meat retaining means consist of a clamp (70;170), the jaws (72;172) of which are actuated by self-centring means.

9. Machine according to Claim 8, **characterized in that** said self-centring means consist of pneumatic cylinders (74) and a pair of gear wheels (77) joined to rods (73) for transmitting the movement to the arms (71) of the gripper (70).

10. Machine according to Claim 1, **characterized in that** it comprises a station (100) for loading the part and a station (200) for complete deboning.

11. Machine according to Claim 1, **characterized in that** it comprises at least one station (100) for loading the part and a plurality of partial deboning stations (1200,2200,3200,4200).

12. Machine according to Claim 10 or 11, **characterized in that** it comprises means (50;165a) for conveying the part (4) from the loading station (100) to the cutting/deboning station (200;1200,2200,3200,4200).

13. Machine according to Claim 12 when dependent upon Claim 10, **characterized in that** said conveying means consist of an arm (51) at the opposite ends of which the means (60) for gripping the bone (5) are fastened.

14. Machine according to Claim 13, **characterized in that** said arm (51) is integral with a rotating column (52).

15. Machine according to Claim 14, **characterized in that** said means for relative movement of said bone and meat retaining means consist of a pneumatic cylinder (63) integral with the said rotating arm (51) and the rod (63a) thereof.

16. Machine according to.Claim 12 when dependent upon Claim 11, **characterized in that** said conveying means consist of slides (165a) which support the gripping means (160) and are movable along an outward travel path and a return travel path parallel to the direction of feeding of the part from the entry station to the exit station of the machine.

17. Machine according to Claim 16, **characterized in that** said slides (165a) are integral with an endless chain/belt (166) arranged around two pulleys (166a), at least one of which is motorized.

18. Machine according to Claim 12 when dependent upon Claim 11, **characterized in that** said means (172) for retaining the meat of the part (4) are .arranged at different heights with respect to the machine base.

19. Machine according to Claim 12 when dependent upon Claim 11, **characterized in that** said means for relative movement of the bone (5) and meat retaining means (160) consist of a cylinder (171), integral with the frame (1), the rod (171a) of which is connected to the clamp (170) for retaining the meat of the part (4).

20. Machine according to Claim 19, **characterized in that** it comprises an upright (181) for supporting fluid delivery means (80), said upright being displaceably integral with the means for retaining the meat of the part (4).

21. Machine according to Claim 20, **characterized in that** it comprises means (174) designed to impart a rotational movement in both directions to said upright (181) supporting the fluid delivery head.

22. Machine according to Claim 10 or 11, **characterized in that** it comprises automatic means for feeding the parts (4) to the loading station.

23. Machine according to Claim 10 or 11, **characterized in that** it comprises automatic means for removing the part from the cutting/deboning station.

24. Machine according to Claim 10 or 11, **characterized in that** it comprises means (300) for controlling and synchronizing the operating sequences of the machine.

25. Machine according to Claim 1, **characterized in that** said part to be deboned is a ham.

## Patentansprüche

1. Maschine zum Trennen von Fleisch von dem Knochen (5) von Schlachttierteilen (4), mit einem Rahmen (1), der zumindest eine Station (200) zum Schneiden/Ausbeinen eines Schlachttierteils (4) hat, und mit an dieser zumindest einen Station (200) angeordneten
- Mitteln (60, 160) zum Halten des Knochens (5);
- Mitteln (70, 170) zum Halten des Fleischs (4) in einer Richtung parallel zur Richtung der Längsachse des Knochens;
- Mitteln (63, 171) zum Bewegen der Mittel zum Halten des Knochens und der Mittel (70, 170) zum Halten des Fleischs relativ zueinander;
- Mitteln (80) zum Schneiden des Fleischs um den Knochen;
**dadurch gekennzeichnet, daß** sie ferner Dreh- und Kraftübertragungsmittel (76, 76a) zum Drehen der Fleischhaltemittel (70, 170) um eine Achse hat, die im wesentlichen parallel zur Längsachse des Knochens (5) ist, und daß die Schneidmittel (80) einen Fluidstrahl liefern, der das Schneiden des Fleischs um den Knochen (5) ausführt.

2. Maschine nach Anspruch 1, **dadurch gekennzeichnet, daß** das Fluid eine Flüssigkeit ist.

3. Maschine nach Anspruch 2, **dadurch gekennzeichnet, daß** die Flüssigkeit Wasser ist.

4. Maschine nach Anspruch 1, **dadurch gekennzeichnet, daß** die Schneidmittel einen Abgabekopf (81) mit einer Düse zum Abgeben des Fluidstrahls haben.

5. Maschine nach Anspruch 4, **dadurch gekennzeichnet, daß** der Kopf (81) von Vorrichtungen (85) gespeist ist, die Fluid abziehen und mit Druck beaufschlagen.

6. Maschine nach Anspruch 4, **dadurch gekennzeichnet, daß** sich der Kopf um die Längsachse und die Querachse des Strahls dreht.

7. Maschine nach Anspruch 1, **dadurch gekennzeichnet, daß** die Dreh- und Kraftübertragungsmittel einen Getriebemotor (76) und zugehörige Kraftübertragungsmittel (76a) enthalten, die eine rotierende Welle (75) drehen, welche geeignet ist, die Drehung der Mittel (70, 170) zum Halten des Fleischs des Schlachttierteils (4) um eine Achse zu liefern, die im wesentlichen parallel zur Längsachse des Knochens ist.

8. Maschine nach Anspruch 7, **dadurch gekennzeichnet, daß** die Fleischhaltemittel aus einer Klemmvorrichtung (70, 170) bestehen, deren Backen (72, 172) durch selbstzentrierende Mittel betätigt sind.

9. Maschine nach Anspruch 8, **dadurch gekennzeichnet, daß** die selbstzentrierenden Mittel aus Pneumatikzylindern (74) und einem Paar Zahnrädern (77) bestehen, die mit Stangen (73) verbunden sind, um die Bewegung auf die Arme (71) des Greifers (70) zu übertragen.

10. Maschine nach Anspruch 1, **dadurch gekennzeichnet, daß** sie eine Station (100) zum Laden des Schlachttierteils und eine Station (200) zum vollständigen Ausbeinen hat.

11. Maschine nach Anspruch 1, **dadurch gekennzeichnet, daß** sie zumindest eine Station (100) zum Laden des Schlachttierteils und mehrere Stationen (1200, 2200, 3200, 4200) zum partiellen Ausbeinen hat.

12. Maschine nach Anspruch 10 oder 11, **dadurch gekennzeichnet, daß** sie Mittel (50, 165a) zum Befördern des Schlachttierteils (4) von der Ladestation (100) zu der Schneide/Ausbeinstation (200; 1200, 2200, 3200, 4200) hat.

13. Maschine nach Anspruch 12, sofern abhängig von Anspruch 10, **dadurch gekennzeichnet, daß** die Fördermittel aus einem Arm (51) bestehen an dessen einander abgewandten Enden die Mittel (60) zum Greifen des Knochens (5) befestigt sind.

14. Maschine nach Anspruch 13, **dadurch gekennzeichnet, daß** der Arm (51) einstückig mit einer rotierenden Säule (52) ist.

15. Maschine nach Anspruch 14, **dadurch gekennzeichnet, daß** die Mittel zum Bewegen der Knochenhaltemittel und der Fleischhaltemittel relativ zueinander aus einem Pneumatikzylinder (63) bestehen, der mit dem rotierenden Arm (51) und dessen Stange (63a) einstückig ist.

16. Maschine nach Anspruch 12, sofern abhängig von Anspruch 11, **dadurch gekennzeichnet, daß** die Fördermittel aus Schlitten (165a) bestehen, die die Greifmittel (160) halten und entlang einer nach außen führenden Laufstrecke und einer zurück führenden Laufstrecke parallel zu der Richtung bewegbar sind, in der das Schlachttierteil von der Eingangsstation zu der Ausgangsstation der Maschine transportiert wird.

17. Maschine nach Anspruch 16, **dadurch gekennzeichnet, daß** die Schlitten (165a) einstückig mit einer Endloskette/einem Endlosriemen (166) sind, die/der um zwei Riemenscheiben (166a) angeordnet sind, von denen zumindest eine motorisiert ist.

18. Maschine nach Anspruch 12, sofern abhängig von Anspruch 11, **dadurch gekennzeichnet, daß** die Mittel (172) zum Halten des Fleischs des Schlachttierteils (4) in bezüglich der Maschinenbasis unterschiedlichen Höhen angeordnet sind.

19. Maschine nach Anspruch 12, sofern abhängig von Anspruch 11, **dadurch gekennzeichnet, daß** die Mittel zum Bewegen der Mittel (160) zum Halten des Knochens (5) und der Mittel zum Halten des Fleischs relativ zueinander aus einem Zylinder (171) bestehen, der einstückig mit dem Rahmen (1) ist, dessen Stange (171a) mit der Klemmvorrichtung (170) zum Halten des Fleischs des Schlachttierteils (4) verbunden ist.

20. Maschine nach Anspruch 19, **dadurch gekennzeichnet, daß** sie eine Stütze (181) zum Halten der Fluidabgabemittel (80) enthält, wobei die Stütze verschiebbar einstückig mit den Mitteln zum Halten des Fleischs des Schlachttierteils (4) ist.

21. Maschine nach Anspruch 20, **dadurch gekennzeichnet, daß** sie Mittel (174) enthält, die dazu dienen, eine Drehbewegung in beide Richtungen auf die Stütze (181) zu übertragen, die den Fluidabgabekopf hält.

22. Maschine nach Anspruch 10 oder 11, **dadurch gekennzeichnet, daß** sie automatische Mittel zum Transportieren der Schlachttierteil (4) zu der Ladestation enthält.

23. Maschine nach Anspruch 10 oder 11, **dadurch gekennzeichnet, daß** sie automatische Mittel zum Abtransportieren des Schlachttierteils aus der Schneide/Ausbeinstation enthält.

24. Maschine nach Anspruch 10 oder 11, **dadurch gekennzeichnet, daß** sie Mittel (300) zum Steuern und Synchronisieren der aufeinanderfolgenden Arbeitsschritte der Maschine hat.

25. Maschine nach Anspruch 1, **dadurch gekennzeichnet, daß** das auszubeinende Schlachttierteil ein Schinken ist.

## Revendications

1. Machine pour séparer la chair de l'os (5) de morceaux (4) d'animaux, comprenant un châssis (1) qui contient au moins une station (200) pour couper / désosser un morceau d'animal (4) et, agencés à la dite au moins une station (200) :
un dispositif (60, 160) pour retenir l'os (5) ;
un dispositif (70, 170) pour retenir la chair (4) dans une direction parallèle à la direction de l'axe longitudinal de l'os ;
un dispositif (63, 171) pour engendrer un mouvement relatif du dit os et du dit dispositif de retenue de chair (70, 170);
un dispositif (80) pour couper la chair autour de l'os ;
**caractérisée en ce qu'**elle comprend en outre un dispositif de rotation et de transmission (76, 76a) pour engendrer une rotation du dit dispositif de retenue de chair (70, 170) autour d'un axe qui est sensiblement parallèle à l'axe longitudinal de l'os (5), et **en ce que** le dit dispositif de coupe (80) émet un jet de fluide qui effectue la coupe de la chair autour de l'os (5).

2. Machine selon la revendication 1, **caractérisée en ce que** le dit fluide est un liquide.

3. Machine selon la revendication 2, **caractérisée en ce que** le dit liquide est de l'eau.

4. Machine selon la revendication 1, **caractérisée en ce que** le dit dispositif de coupe comprend une tête de distribution (81) pourvue d'une buse d'émission du jet de fluide.

5. Machine selon la revendication 4, **caractérisée en ce que** la dite tête (81) est alimentée au moyen de dispositifs d'aspiration et de refoulement sous pression de fluide (85).

6. Machine selon la revendication 4, **caractérisée en ce que** la dite tête pivote autour de l'axe longitudinal et de l'axe transversal du jet.

7. Machine selon la revendication 1, **caractérisée en ce que** le dit dispositif de rotation et de transmission comprend un groupe moto-réducteur (76) et un dispositif de transmission associé (76a) qui entraînent en rotation un arbre rotatif (75) prévu pour engendrer une rotation du dit dispositif (70, 170) de retenue de la chair du morceau (4) autour d'un axe qui est sensiblement parallèle à l'axe longitudinal de l'os.

8. Machine selon la revendication 7, **caractérisée en ce que** le dit dispositif de retenue de chair consiste en une pince (70 ; 170) dont les mâchoires (72 ; 172) sont actionnées par des moyens à auto-centrage.

9. Machine selon la revendication 8, **caractérisée en ce que** les dits moyens à auto-centrage comprennent des vérins pneumatiques (74) et deux engrenages (77) reliés à des tiges (73) pour transmettre le mouvement aux bras (71) du dispositif de prise (70).

10. Machine selon la revendication 1, **caractérisée en ce qu'**elle comprend une station (100) pour le chargement du morceau d'animal et une station (200) pour terminer le désossage.

11. Machine selon la revendication 1, **caractérisée en ce qu'**elle comprend au moins une station (100) pour le chargement du morceau et une pluralité de stations de désossage partiel (1200, 2200, 3200, 4200).

12. Machine selon la revendication 10 ou 11, **caractérisée en ce qu'**elle comprend un dispositif (50 ; 165a) pour transporter le morceau (4) de la station de chargement (100) à la station de coupe / désossage (200, 1200, 2200, 3200, 4200).

13. Machine selon la revendication 12 lorsqu'elle dépend de la revendication 10, **caractérisée en ce que** le dit dispositif de transport comprend un bras (51) aux extrémités opposés duquel est fixé le dispositif (60) de prise de l'os (5).

14. Machine selon la revendication 13, **caractérisée en ce que** le dit bras (51) est solidaire d'une colonne tournante (52).

15. Machine selon la revendication 14, **caractérisée en ce que** le dit dispositif de génération d'un mouvement relatif du dit os et du dit dispositif de retenue de chair comprend un vérin pneumatique (63) solidaire du dit arbre rotatif (51) et de sa tige (63a).

16. Machine selon la revendication 12 lorsqu'elle dépend de la revendication 11, **caractérisée en ce que** le dit dispositif de transport comprend des glissières (165a) qui supportent le dispositif de prise (160) et sont déplaçables le long d'un chemin de déplacement vers l'extérieur et d'un chemin de retour parallèles à la direction d'alimentation du dit morceau, de la station d'entrée à la station de sortie de la machine.

17. Machine selon la revendication 16, **caractérisée en ce que** les dites glissières (165a) sont solidaires d'une chaîne / courroie sans fin (166) agencée autour de deux poulies (166a) dont au moins une est motorisée.

18. Machine selon la revendication 12 lorsqu'elle dépend de la revendication 11, **caractérisée en ce que** le dit dispositif (172) de retenue de la chair du morceau (4) est placé à différentes hauteurs par rapport à la base de la machine.

19. Machine selon la revendication 12 lorsqu'elle dépend de la revendication 11, **caractérisée en ce que** le dit dispositif de génération d'un mouvement relatif de l'os (5) et du dispositif de retenue de chair (160) comprend un vérin (171), solidaire du châssis (1), dont la tige (171a) est reliée à la pince (170) pour retenir la chair du morceau (4).

20. Machine selon la revendication 19, **caractérisée en ce qu'**elle comprend un montant (181) pour supporter le dispositif de distribution de fluide (80), le dit montant étant déplaçable solidairement avec le dispositif de retenue de la chair du morceau (4).

21. Machine selon la revendication 20, **caractérisée en ce qu'**elle comprend un dispositif (174) conçu pour communiquer un mouvement de rotation dans les deux sens au dit montant (181) supportant la tête de distribution de fluide.

22. Machine selon la revendication 10 ou 11, **caractérisée en ce qu'**elle comprend des moyens automatiques pour amener les morceaux (4) à la station de chargement.

23. Machine selon la revendication 10 ou 11, **caractérisée en ce qu'**elle comprend des moyens automatiques pour évacuer le morceau de la station de coupe / désossage.

24. Machine selon la revendication 10 ou 11, **caractérisée en ce qu'**elle comprend un dispositif (300) pour commander et synchroniser les séquences de fonctionnement de la machine.

25. Machine selon la revendication 1, **caractérisée en ce que** le dit morceau à désosser est un jambon.
